Europäisches Patentamt

European Patent Office

Office européen des brevets

(11) Publication number: **0 244 413**
**B1**

(12) **EUROPEAN PATENT SPECIFICATION**

(45) Date of publication of patent specification: **13.06.90**

(21) Application number: **86901151.0**

(22) Date of filing: **22.01.86**

(86) International application number:
**PCT/SE86/00020**

(87) International publication number:
**WO 86/04723 14.08.86 Gazette 86/18**

(51) Int. Cl.⁵: **G 11 B 33/04,** G 11 B 23/02,
B 65 D 6/06

(54) **EXCHANGEABLE AND LOCKABLE STORING BOX IN A FRAME.**

(30) Priority: **04.02.85 SE 8500484**

(43) Date of publication of application:
**11.11.87 Bulletin 87/46**

(45) Publication of the grant of the patent:
**13.06.90 Bulletin 90/24**

(84) Designated Contracting States:
**AT DE FR GB IT**

(56) References cited:
**EP-A-0 073 073**
**DE-C-2 903 176**
**GB-A-2 042 476**
**GB-A-2 153 427**
**SE-B- 379 110**
**US-A-3 977 523**

(73) Proprietor: **LITH, Gunnar**
**Storgatan 31**
**S-598 00 Vimmerby (SE)**

(72) Inventor: **LITH, Gunnar**
**Storgatan 31**
**S-598 00 Vimmerby (SE)**

(74) Representative: **Wärulf, Olov**
**Sköldvägen 36**
**S-613 00 Oxelösund (SE)**

Courier Press, Leamington Spa, England.

# Description

The present invention relates to a storing box, which removably and lockably can be placed in a frame or the like in a car, a boat, a bookcase or the like.

Storing boxes with and without cassette boxes are known. The storing boxes are either movably placed in a designated place or fixedly disposed in a frame or on a holder.

The German patent publication DE—A—2 903 176 discloses a radio apparatus with a frame in which the radio can be exchanged and locked. The locking mechanism consists of a number of U-shaped cuts through the side walls of the radio forming plate springs, which snap, upon inserting the radio into the frame, into holes in the frame. Unlocking is accomplished by inserting a special unlocking device into holes in the front of the radio thereby disengaging the snap mechanism.

The European patent publication EP—A—0 092 666 discloses a storing box containing a plurality of sleeves which can be pulled out of the storing box individually for storing tape cassettes or the like.

The storing box according to the invention is provided, in a preferred embodiment, with a plurality of, say 5 or 10, boxes for music cassettes. Such a storing box is designed to be placed, removably and lockably, in its frame with one hand. Each box is, in a manner known per se, individually removable from the storing box by about half of its width. Said box is provided with a cover, which can be opened, when the box has been removed to such an extent, that a cassette can be taken out of or put into the box.

The object of the present invention is to produce a storing box and a frame or the like in order to be able to control the storing box in the frame in a simple manner and, preferably with one hand, to exchange it as well as lock it in the frame.

This object is attained by means of the storing box according to the following patent claim 1.

Thus, the present invention relates to a storing box with a frame in which it can be exchanged as well as locked. Also, the storing box is surrounded by a frame shell, which is fastened to the frame and supports the storing box.

There are two mainly U-shaped slots, cuts or slits cut through in preferably each one of the two side walls of the storing box, to produce mainly horizontally disposed plate springs in the side walls. The plate springs are provided at their foremost portions with shoulders projecting from the side walls and having bevelled surfaces. The storing box has also locking means for each one of the plate springs. The locking means are disposed along the inner surface of the corresponding side wall and are removably disposed in the storing box. When these means, which lock the plate springs, are pulled out of the storing box to a sufficient degree, the plate springs can be bent inwardly and towards the interior of the storing box and the shoulders of the plate springs glide with their bevelled surfaces along matching edge portions of the frame shell. In this way the shoulders are pushed into the storing box and the function of the plate springs as the locking means of the storing box ceases and the storing box can be removed entirely from the frame and the frame shell.

A preferred embodiment of the storing box according to the present invention comprises a plurality of boxes for music cassettes or the like. These boxes can be individually pulled out of the storing box but just to a maximum of about half their length in the pull-out direction. They are preferably provided with covers, which can be opened in this pulled-out position of the boxes in order to put cassettes in them and remove them respectively. When two or several chosen boxes serving jointly as the locking means of the plate springs and the storing box respectively have been removed to a maximum and one continues to pull at the boxes, the plate springs are bent inwardly to the interior of the storing box, since the shoulders of the plate springs slide with their bevelled surfaces along corresponding edge portions of the frame shell and into the storing box. Consequently, the function of the shoulders as the locking means of the plate spring and the storing box ceases and the storing box is, when the pull at the boxes is continued, removed from the frame/frame shell. In order to later on push the storing box into the frame and lock it in the frame, the two chosen boxes must be kept at their maximum pulled-out positions, when the storing box is pushed into the frame all the way. Subsequently, the two boxes can be pushed into the storing box all the way in order to attain a locking of the plate springs in the side walls and also anew the storing box in the frame/frame shell.

In another preferred embodiment of the present invention the locking means of the two plate springs comprises a dovetailed recess as well as a locking plate designed for said recess. The recess is made in the inner surface of the corresponding gable wall. The storing box is initially pushed into the frame/frame shell and subsequently the locking plates are slid into their recesses. In this way they lock the corresponding plate springs and consequently the storing box is locked in the frame/frame shell.

The present invention is described as follows in more detail, reference being made to the accompanying drawings, in which:

Figure 1 is a perspective view of a partially translucent storing box according to the present invention in a frame having a frame shell and containing a plurality of cassette boxes, only two of which being shown;

Figure 2 is also a perspective view of the same storing box and frame and frame shell as in Figure 1, the two shown boxes in the storing box being pulled-out and the storing box itself being removed from the frame;

Figures 3a and 3b mainly is a horizontal cross section of on the one hand the storing box in Figures 1 and 2 with a box pulled out at a maximum and on the other hand the frame and its frame shell in the same figures;

Figures 4a and 4b show the storing box and its frame and frame shell in the same manner as in Figure 3, but the storing box has been pushed into the frame and subsequently boxes have been pulled out; and

Figures 5a and 5b is a perspective view of a section of a storing box according to the invention as well as a locking plate, which can lock the storing box in its frame (not shown).

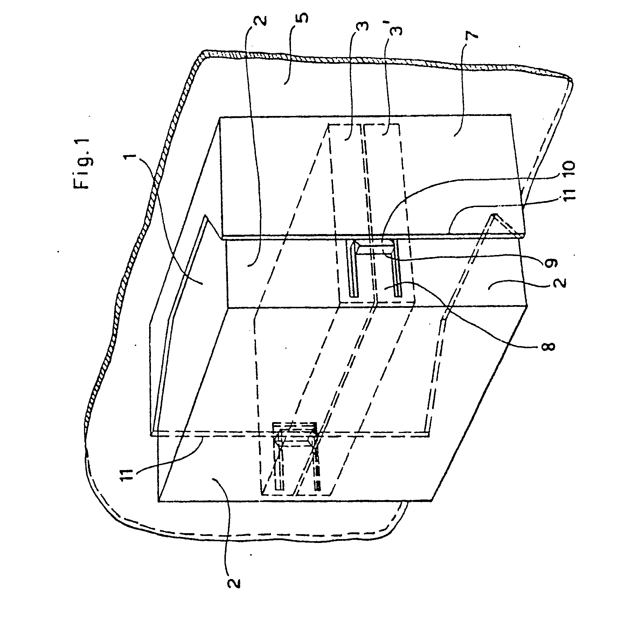

Figure 1 shows in perspective a storing box 1 having two side walls 2 and cassette boxes 3 (dashed lines), which can be pushed into the storing box. Storing box 1 is introduced into a frame 5 having a frame shell 7, which in this condition partially surrounds the storing box. All the boxes 3, also the ones not shown, are fully pushed into the storing box and the latter is fully pushed into frame openings 5, 7.

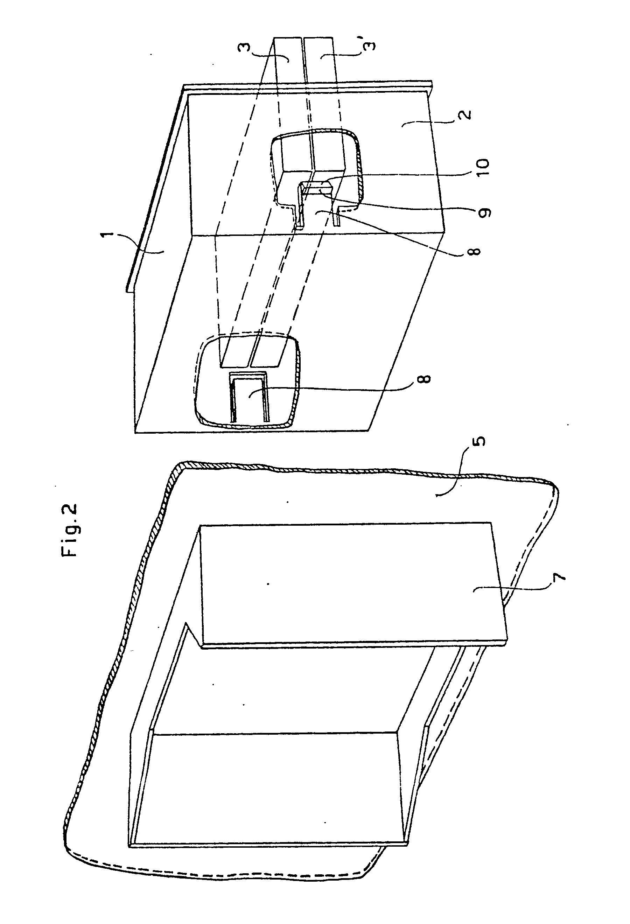

Figure 2 shows in perspective frame 5 and frame shell 7 fastened to the frame. Storing box 1 is fully removed from frame 5. Frame shell 7, which has a prismatic shape and is directed rearwards, is designed to retain and support storing box 1 in the frame opening and facilitates the positioning of the storing box in the frame opening. Two boxes 3, 3' are shown (partly dashed lines). They are pulled out of the storing box at a maximum. Locking devices, known per se but not shown, stop a continued removal of boxes 3, 3' from the storing box. The portions of the partially but at a maximum pulled-out boxes 3, 3', which are positioned inside the storing box, have the same length as the sum of the thickness of frame 5 and the length of frame shell 7. Consequently, they are extended to shoulder 9 of plate spring 8, which is U-shaped and is cut out from the side wall or side walls 2 of the storing box. Shoulder 9 projects outside side wall 2 and normally, when boxes 3, 3' have been pushed in, it locks the storing box in frame 5 and frame shell 7, since plate spring 8 cannot enter along the inner side wall of frame shell 7, since the two boxes 3, 3' in storing box 1 stop such an entry. A plate spring 8 having a shoulder 9 is also provided on opposite side wall 2 of the storing box. But now, when the two boxes 3, 3' have been pulled out at a maximum, plate springs 8 and their shoulders 9 can be bent inwardly to the interior of storing box 1 and the restriction for a continued removal of storing box 1 from frame 5, 7, when one continues to pull at the two boxes 3, 3', ceases and storing box 1 comes loose and can be removed.

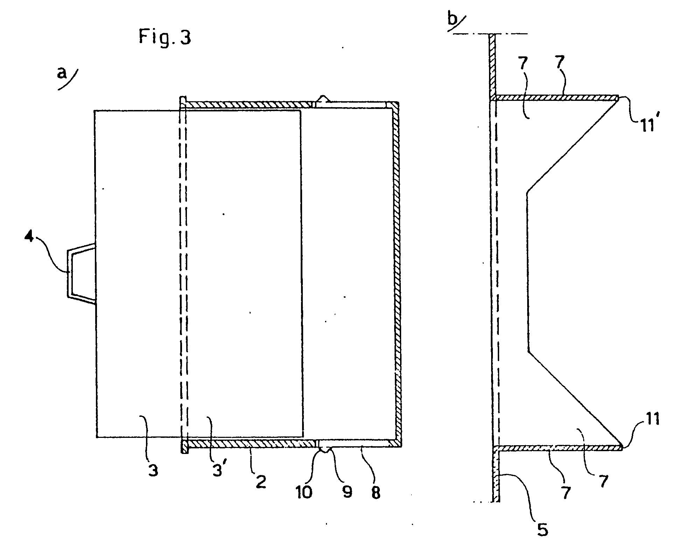

Figure 3 shows storing box 1 in Figures 1 and 2 in a horizontal cross section after having removed it from frame 5, 7 by means of two boxes 3, 3'. Plate springs 8 having projecting shoulders 9 with bevelled surfaces 10, which are shown in their entirety, are freely movable and have not stopped the removal of storing box 1 from frame 5 and frame shell 7. Projecting shoulders 9 have been pushed inwardly by means of edges 11 of frame shell 7, because bevelled surfaces 10 of shoulders 9 have slided along edges 11 and consequently the shoulders have been pushed inwardly and the storing box could be removed from frame shell 7 and frame 5 in its entirety.

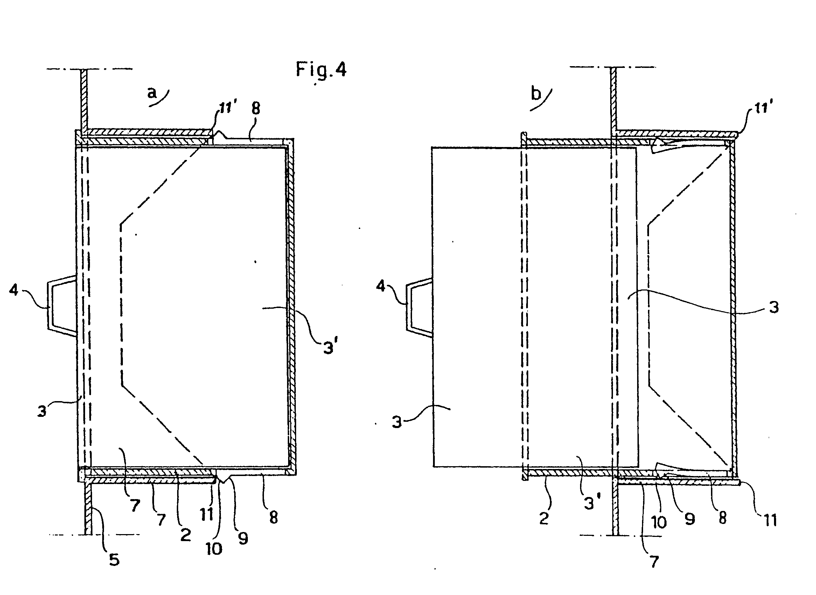

Figure 4 shows storing box 1, when it is fully introduced into its frame 5 and frame shell 7 as well as when it is partially pulled out of the frame and the frame shell. The two boxes 3, 3', which mainly are located on the same level as plate springs 8, 8, lock in a) the latter and consequently lock storing box 1 in frame 5, 7. Edges 11, 11' of frame shell 7 are an obstacle to shoulders 9 of plate springs 8. When subsequently said two boxes 3, 3' have been pulled out at a maximum in b), plate springs 8 become freely movable inwardly towards the interior of the storing box. When a person continues to pull at the two boxes 3, 3', shoulders 9 of plate springs 8 are pressed inwardly by means of edges 11, 11' of the frame shell and shoulders 9 are not an obstacle to the storing box being pulled out of frame 5, 7, when said person continues to pull at the two boxes 3, 3'.

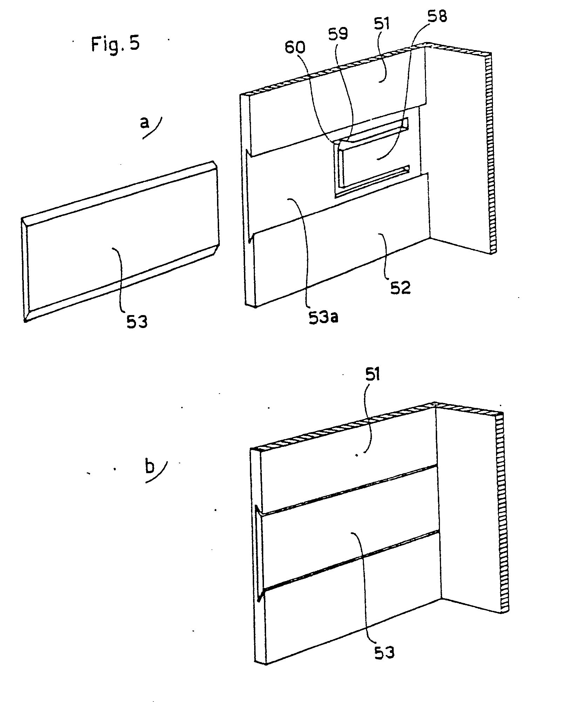

In Figure 5 a particular embodiment of the invention is shown. Instead of two locking boxes a locking plate 53 is used in order to easily lock storing box 51 in its frame 55 (not shown) but also to easily loosen it and exchange it. Storing box 51 is initially pushed into its frame 55 and subsequently locking plate 53 is pushed into a dovetailed recess 53a in side wall 52 of storing box 51. Consequently plate spring 56 is locked by locking plate 53 and edge 511 (not shown) of frame shell 57. In opposite side wall 52 (not shown) there is preferably also a dovetailed recess 53a for a locking plate 53, which results in the storing box being firmly locked in its frame and its frame shell, when it has been pushed into the same.

**Claims**

1. A storing box (1) with a frame (5) as well as with a frame shell (7) in which the storing box can be exchanged and locked having a prismatic shape and disposed in the opening of the frame, the storing box having two substantially U-shaped cuts through the two side walls (2) of said storing box (1), by means of which mainly horizontally disposed plate springs (8) are formed in said side walls (2), which plate springs (8) at their foremost portions are provided with shoulders (10) projecting outwardly from said side walls and having bevelled surfaces, as well as locking means (3) corresponding to each plate spring (8) which are disposed along the inner surface of the corresponding side wall and which are removable from said storing box, whereby, when said locking means (3) are removed from the storing box to a sufficient extent, the plate springs (8) become bendable inwardly into said storing box so that shoulders (10) can slide along corresponding edge portions (11) of said frame shell (7) owing to their bevelled surfaces, whereupon said storing box (1) can be removed from said frame (5) and said frame shell (7) in its entirety.

2. A storing box according to patent claim 1, which contains a plurality of boxes (3) for music cassettes or the like, which boxes individually can be pulled out of said storing box (1) but only to a maximum, which is about half their length in the removal direction, and preferably are provided with covers, which can be opened in this position in order to be able to put cassettes in them and remove cassettes from them, wherein said shoulders (9) of said plate springs (8) are located in said side walls (2) in such a way, that, when two chosen boxes (3, 3') serving jointly as locking means for said storing box are pulled out of said storing box (1) to a maximum and there is a continued pull at the two boxes, said plate springs (8) are bent inwardly into said storing box.

3. A storing box according to patent claim 1, wherein the locking means of said two plate springs (58) comprise on the one hand a dovetailed recess (53a) in each of said side wall surfaces (52) of said storing box (5) and on the other hand a locking plate (53) with a corresponding shape into which recess (53a) said locking plate (53) can be slideably introduced in order to lock corresponding plate spring (58).

**Patentansprüche**

1. Lagerbehälter (1) mit einem Gestell (5) sowie mit einem Gestellgehäuse (7), der prismatische Form aufweist und in der Gestellöffnung angeordnet ist, welcher Lagerbehälter zwei im wesentliche U-förmige Einschnitte in den beiden Seitenwänden (2) des Lagerbehälters (1), mit deren Hilfe im wesentlichen horizontal angeordnete Blattfedern (8) in den Seitenwänden (2) gebildet sind, welche Blattfedern (8) an ihren vordersten Abschnitten mit Absätzen (10) versehen sind, die von den Seitenwänden nach außen vorspringen und abgeschrägte Oberflächen aufweisen, sowie Verriegelungseinrichtungen (3) aufweist, die jeder der Blattfedern (8) zugeordnet und entlang der Innenseite der betreffenden Seitenwand und vom Lagerbehälter entfernbar angeordnet sind, wodurch, wenn diese Verriegelungseinrichtungen (3) um ein genügendes Ausmaß von dem Lagerbehälter entfernt sind, die Blattfedern nach innen in den Lagerbehälter biegbar werden, so daß die Absätze (10) dank ihrer abgeschrägten Oberflächen über entsprechende Randabschnitte (11) des Gestellgehäuses (7) gleiten können, worauf der Lagerbehälter (1) in seiner Gesamtheit dem Gestell (5) und dem Gestellgehäuse (7) entnommen werden kann.

2. Lagerbehälter nach Anspruch 1, der mehrere Behälter (3) für Musikcassetten od.dgl. enthält, welche Behälter einzeln aus dem Lagerbehälter (1), jedoch nur bis zu einem Maximum, das etwa der Hälfte ihrer Länge in Ausziehrichtung entspricht, herausziehbar und vorzugsweise mit Deckeln versehen sind, die in dieser Lage geöffnet werden können, um in sie Cassetten hineinlegen bzw. aus ihnen herausnehmen zu können, wobei die Absätze (9) der Blattfedern (8) in den Seitenwänden (2) derart angeordnet sind, daß, wenn zwei ausgewählte Behälter (3, 3'), die gemeinsam als Verriegelungseinrichtung des Lagerbehälters dienen, bis zu einem Maximum aus dem Lagerbehälter (1) herausgezogen sind und ein fortgesetzter Zug auf die zwei Behältern ausgeübt wird, die Blattfedern (8) einwärts in den Lagerbehälter gebogen werden.

3. Lagerbehälter nach Anspruch 1, wobei die Verriegelungseinrichtung der beiden Blattfedern (58) einerseits aus einer Schwalbenschwanzausnehmung (53a) in jeder Seitenwand (52) des Lagerbehälters (5) und anderseits aus einer Riegelplatte (53) mit entsprechender Gestalt besteht, in welche Ausnehmung (53a) die Riegelplatte (53) gleitend einführbar ist, um die entsprechende Blattfeder (58) zu verriegeln.

**Revendications**

1. Une boîte de rangement (1) avec un cadre ou panneau (5) ainsi qu'un support de montage en forme d'enveloppe (7) de forme prismatique et disposée dans l'ouverture du panneau, la boîte de rangement possédant deux découpes, sensiblement en forme de U, au travers de deux parois latérales (2) de ladite boîte de rangement (1), grâce à quoi des lames de ressort (8) disposées sensiblement horizontalement sont ménagées dans lesdites parois latérales (2), lesdites lames de ressort (8) étant pourvues, à leurs parties le plus en avant, de talons (10) faisant saillie vers l'extérieur à partir desdites parois latérales, et comportant des surfaces chanfreinées, ainsi que des moyens de verrouillage (3) correspondant à chaque lame de ressort (8), qui sont disposés le long de la surface intérieure de la paroi latérale correspondante et qui peuvent être extraits de ladite boîte de rangement, de sorte que lorsque lesdits moyens de verrouillage (3) sont extraits de la boîte de rangement d'une distance suffisante, les lames de ressort (8) peuvent être fléchies vers l'intérieur dans ladite boîte de rangement afin que les talons (10) puissent glisser le long des parties de bord correspondantes (11) dudit support de montage (7) en raison de leurs surfaces chanfreinées, après quoi ladite boîte de rangement (1) peut être extraite en totalité dudit panneau (5) et dudit support de montage (7).

2. Une boîte de rangement selon la revendication 1, contenant une pluralité de boîtes (3) pour cassettes de musique ou analogue, lesdites boîtes pouvant être extraites individuellement de ladite boîte de rangement (1), mais uniquement jusqu'à un maximum qui est d'environ la moitié de leur longueur dans le sens de l'enlèvement, et qui sont munies, de préférence de couvercles que l'on peut ouvrir dans cette position afin de pouvoir placer des cassettes à l'intérieur et d'enlever des cassettes de celles-ci, dans laquelle lesdits talons (9) desdites lames de ressort (8) sont disposés dans lesdites parois latérales (2) de telle sorte que lorsque deux boîtes choisies (3, 3'), servant conjointement de moyens de verrouillage pour ladite boîte de rangement sont extraites de ladite boîte de rangement (1) jusqu'à un maximum et que l'on poursuit la traction sur les deux boîtes, lesdites lames de ressort (8) sont fléchies vers l'intérieur dans ladite boîte de rangement.

3. Une boîte de rangement selon la revendication 1, dans laquelle les moyens de verrouillage desdites deux lames de ressort (58) comprennent, d'une part un évidement à queue d'aronde (53a) dans chacune desdites surfaces de paroi latérales (52) de ladite boîte de rangement (5) et, d'autre part, une plaque de verrouillage (53) d'une forme correspondante, qui peut être introduite par coulissement dans ledit évidement (53a) de ladite plaque de verrouillage (53) de manière à verrouiller la lame de ressort correspondante (58).

Fig.1

EP 0 244 413 B1

Fig.2

EP 0 244 413 B1

Fig. 3

a)

b)

EP 0 244 413 B1

Fig.4

a)

11'  8

4

3'

3

7  7  2  11  8

5  10  9

b)

4

3

2  3'  10  9  8  11

7

11'

3

EP 0 244 413 B1

EP 0 244 413 B1

Fig. 5

a)

b)

5